# EUROPÄISCHE PATENTSCHRIFT

(11) **EP 0 923 419 B1**
(45) Veröffentlichungstag und Bekanntmachung des Hinweises auf die Patenterteilung: **28.03.2001**
(21) Anmeldenummer: 97940097.5
(22) Anmeldetag: 21.08.1997
(51) Int. Cl.: B08B 7/02, B08B 5/04, B23Q 11/00

(54) **VERFAHREN ZUM ENTFERNEN VON AN EINEM WERKSTÜCK HAFTENDEN FLÜSSIGEN UND/ODER FESTEN VERUNREINIGUNGEN, INSBESONDERE ÖLEN, EMULSIONEN, IN DENEN FESTE VERUNREINIGUNGEN, INSBESONDERE SPÄNE, ENTHALTEN SEIN KÖNNEN UND VORRICHTUNG ZUR DURCHFÜHRUNG DES VERFAHRENS**
PROCESS FOR REMOVING LIQUID AND/OR SOLID IMPURITIES ADHERING TO A WORKPIECE, IN PARTICULAR OILS, EMULSIONS AND/OR CHIPS AND A DEVICE FOR CARRYING OUT THE PROCESS
PROCEDE POUR ELIMINER DES IMPURETES LIQUIDES ET/OU SOLIDES, NOTAMMENT DES HUILES, EMULSIONS ET/OU COPEAUX, ADHERANT A UNE PIECE, ET DISPOSITIF POUR LA MISE EN OEUVRE DUDIT PROCEDE

(30) Priorität: 22.08.1996 DE 19633771; 24.04.1997 DE 19717171
(43) Veröffentlichungstag der Anmeldung: 23.06.1999
(73) Patentinhaber: Döhrer, Klaus Reinhold, 59423 Unna (DE)
(72) Erfinder: Döhrer, Klaus Reinhold, 59423 Unna (DE)
(74) Vertreter: Schulze Horn & Partner
(86) Internationale Anmeldenummer: EP9704531
(87) Internationale Veröffentlichungsnummer: WO9807531

(56) Entgegenhaltungen:
- WO-A-96/24462
- US-A- 3 989 537
- US-A- 5 145 297

## Beschreibung

Die Erfindung betrifft ein Verfahren nach dem Oberbegriff des Anspruchs 1 und eine zugehörige Vorrichtung nach dem Oberbegriff des Anspruchs 7.

Werkstücke, wie metallische Maschinenteile, werden insbesondere nach einer spanenden Bearbeitung vor dem nächsten Arbeitsgang oder vor dem Einbau oder Versand von anhaftenden Flüssigkeiten in Form von Ölen oder Emulsionen, und anderen Verunreinigungen, wie anhaftenden Spänen und Schleifstaub, gereinigt. Nach dem Stand der Technik sind hierfür verschiedene Verfahren üblich.

In einem ersten, verbreitet eingesetzten und somit aus der Praxis bekannten Verfahren wird das Werkstück in einer Waschvorrichtung in einer geeigneten, meist erwärmten und oft Lösungsmittel enthaltenden Waschflüssigkeit gewaschen, abgespült und anschließend getrocknet und bei Bedarf zum Schutz gegen Korrosion mit einem entsprechenden Mittel behandelt, z.B. dünn mit Öl eingesprüht. Nachteilig ist bei diesem Verfahren und dieser Vorrichtung insbesondere der hohe Energiebedarf, der zum einen durch eine Beheizung der Waschflüssigkeit und zum anderen durch die erforderliche Trocknung der Werkstücke durch Wärmezufuhr entsteht. Außerdem ist aus Umweltschutzgründen eine aufwendige und teure Aufbereitung und Reinigung der Waschflüssigkeit erforderlich.

Aus der US 3 989 537 sind ein Verfahren und eine Vorrichtung zur Vibrationsreinigung von Motorblöcken und ähnlichen Werkstücken von Guß- und Bearbeitungsabfällen bekannt. Gemäß diesem bekannten Verfahren wird das Werkstück um eine Längsachse in resonante Torsionsschwingungen versetzt. Das Werkstück kann gleichzeitig gedreht werden, um den durch die Schwingungen von den Wänden des Werkstücks gelösten Abfall aus den Hohlräumen des Werkstücks herausfallen zu lassen. Weiterhin wird eine Vibrationsreinigungsanlage beschrieben, die einen elastisch gelagerten drehbaren Rahmen zur Einspannung und Drehung eines Motorblocks aufweist. An dem Motorblock ist ein kleiner Exzenter-Schwinger angebracht, der durch einen Motor antreibbar ist und den Motorblock in Resonanzschwingungen versetzt.

Als nachteilig wird bei diesem bekannten Stand der Technik angesehen, daß hiermit lediglich Werkstücke gereinigt werden können, die vollkommen oder zumindest weitestgehend trocken sind. Werkstücke, an denen Flüssigkeiten, z.B. Öl, haften, können auf diese Weise nicht oder nicht vollständig gereinigt werden, da allein durch die erzeugten Schwingungen die anhaftenden Flüssigkeiten sowie die durch diese gebundenen Schmutzpartikel nicht vom Werkstück gelöst werden können.

Die US 4 381 577 beschreibt eine Vorrichtung zur Entfernung von Schmutzpartikeln aus Bohrungen oder Hohlräumen in Werkstücken. Dazu wird das Werkstück in Schwingungen versetzt, während gleichzeitig Luft durch die Bohrung oder den Hohlraum geblasen wird, wodurch dort befindliche Schmutzpartikel aus dem Inneren des Werkstücks entfernt werden sollen.

Eine Entfernung von Schmutzpartikeln und auch Flüssigkeiten aus dem Inneren von Werkstücken ist hiermit zwar möglich, jedoch werden die entfernten Partikel und Flüssigkeiten infolge des Ausblasens unkontrolliert in die Umgebung ausgetragen. Dies hat eine Verschmutzung der Umgebung zur Folge, die unerwünscht oder sogar schädlich ist.

Die US 5 145 297 zeigt eine Vorrichtung und ein Verfahren zur Entfernung von Staub und partikelförmigen Stoffen von einem bearbeiteten Werkstück mittels Absaugung. Bei einer Ausführung der zugehörigen Vorrichtung ist eine Saugleitung mit einer Saugdüse an ihrem Ende vorgesehen, wobei die Saugdüse an ihrer Stirnseite Abstandshalter aufweist, mit denen die Saugdüse an das zu reinigende Werkstück angelegt werden kann. Dabei ist vorgesehen, daß die Saugdüse von unten an das Werkstück herangeführt wird. Weiter umfaßt diese bekannte Vorrichtung eine in die Saugdüse eingebaute Blasdüse, durch welche ein ionisiertes Gas ausblasbar ist, mittels welchem elektrostatische Aufladungen der abzusaugenden parikelförmigen Stoffe neutralisiert und somit wirkungslos gemacht werden sollen. Zusätzlich kann ein Schwingungserzeuger auf die der Saugdüse gegenüberliegende Oberseite des Werkstücks aufgelegt werden, um die Reinigung des Werkstücks zu unterstützen.

Als nachteilig wird bei diesem bekannten Stand der Technik angesehen, daß die Vorrichtung und das Verfahren nur für die Entfernung von trockenen Verunreinigungen von einem Werkstück geeignet sind; für die Entfernung von flüssigen Verunreinigungen, insbesondere von stark haftenden und zähflüssigen Ölen und Emulsionen, sind diese Vorrichtung und das entsprechende Verfahren nicht geeignet. Die Saugdüse weist keine Anpassung an die Kontur des Werkstücks auf, wodurch nur solche Verunreinigungen von dem Werkstück entfernt werden können, die aus leicht lösbaren Partikeln bestehen, die nur unter geringer Haftkraft mit dem Werkstück verbunden sind. Dadurch, daß der Schwingungserzeuger lose auf das Werkstück aufgelegt ist, können zudem keine definierten Schwingungen im Werkstück gewährleistet werden; vielmehr sind die im Werkstück erzeugten Schwingungen eher zufällig und nicht reproduzierbar.

Schließlich sind aus WO 96/24462 ein Verfahren und eine Vorrichtung zur Entfernung von Spänen von bearbeiteten Werkstücken bekannt. Das Werkstück wird dabei auf einem Träger angeordnet und der Träger wird so in Schwingungen versetzt, daß das Werkstück kurzzeitig von dem Träger abhebt und anschließend auf den Träger unter Schwerkraftwirkung aufprallt.

Auch dieses Verfahren und die zugehörige Vorrichtung sind damit nur für die Entfernung von trockenen Verunreinigungen, wie die erwähnten Späne, von dem Werkstück geeignet; flüssige Verunreinigungen, insbesondere Öle oder Emulsionen, können nicht von dem Werkstück entfernt werden. Zusätzlich zu der Reinigung des Werkstück durch Vibration kann vorher und/oder nachher ein Waschvorgang erfolgen, wobei der Waschvorgang mittels Flüssigkeiten oder Gasen, wie Luft, durchgeführt wird. Das Waschen mittels Flüssigkeiten führt zu den oben schon dargelegten Nachteilen; bei einem Waschen mittels Gas oder Luft, was in der Praxis ein Abblasen des Werkstücks darstellt, kommt es zu unkontrollierbaren Verteilungen der Späne oder anderer Verunreinigungen in der Umgebung, was unerwünscht ist.

Es ist Aufgabe der vorliegenden Erfindung, ein Verfahren und eine zugehörigen Vorrichtung zu schaffen, mit denen eine wirksame Reinigung von Werkstücken, an denen flüssige Verunreinigungen in Form von Ölen oder Emulsionen, in denen feste Verunreinigungen, insbesondere Späne, enthalten sein können, haften, ohne Umweltgefährdung, mit geringem Energieverbrauch und mit niedrigen Kosten möglich ist.

Die Lösung des verfahrensbezogenen Teils der Aufgabe erfolgt mit einem gattungsgemäßen Verfahren mit den kennzeichnenden Merkmalen des Anspruchs 1.

Mit dem erfindungsgemäßen Verfahren wird die vorteilhafte Wirkung erzielt, daß auch flüssige Verunreinigungen in Form von Ölen oder Emulsionen wirksam abgesaugt werden können. Diese überraschende Wirkung beruht offenbar darauf, daß durch die Schwingungen die Haftkraft der zu entfernenden Flüssigkeiten und gegebenenfalls darin enthaltenen Partikel am Werkstück stark vermindert wird. Dadurch sinken der Energiebedarf für die Reinigung und die Behandlungszeit je Werkstück. Dabei ist bevorzugt vorgesehen, daß die Schwingungen mit einer Schwingungsfrequenz zwischen 20 und 100 Hz erzeugt werden. Es hat sich überraschend gezeigt, daß sich gerade in diesem Frequenzbereich eine besonders wirksame Mobilisierung der an dem Werkstück haftenden Flüssigkeiten oder Flüssigkeits-Feststoff-Gemische erzielen läßt. Vorteilhaft ist bei dieser erfindungsgemäßen Verfahrensausführung außerdem, daß sich Schwingungen in dem genannten Frequenzbereich mit relativ geringem technischen Aufwand und mit geringem Energiebedarf erzeugen lassen, was den Wirkungsgrad des Verfahrens positiv beeinflußt. Dadurch, daß die Schwingungen an einem das Werkstück festlegenden Teil der Einrichtung erzeugt werden, bleibt die gesamte Oberfläche des Werkstücks, abgesehen von sehr kleinen, für die Festlegung benötigten Bereichen, frei für die Absaugung, wodurch eine Behinderung des Absaugvorganges ausgeschlossen wird. Die Führung des Luftstromes für die Absaugung der Verunreinigungen durch mindestens eine an das Werkstück formangepaßte Düse sorgt dafür, daß auch bei relativ geringem Vakuum ausreichend hohe Luftgeschwindigkeiten im Bereich der Werkstückoberfläche auftreten, die ein wirkungsvolles Entfernen auch von klebrigen und haftenden Verunreinigungen in Form von Ölen oder Emulsionen gewährleisten. Schließlich stellt das erfindungsgemäße Verfahren nicht nur sicher, daß Umweltgefahren vermieden werden, sondern sorgt auch noch dafür, daß die abgesaugten flüssigen und festen Verunreinigungen voneinander getrennt und jeweils einer erneuten oder neuen Verwendung zugeführt werden, was die Entstehung von Abfällen vermeidet und Kosten einspart.

Vorteilhaft ist vorgesehen, daß die Schwingungen in einer derartigen Frequenz erzeugt werden, daß das Werkstück in einer stehenden Welle schwingt, und daß dabei das Werkstück nur an den Knotenpunkten der stehenden Welle abgesaugt wird. Dadurch sammeln sich die Flüssigkeitströpfchen und Schmutzpartikel an den Knotenpunkten und werden dort gezielt abgesaugt. Hierdurch wird eine weitere Verringerung des Energiebedarfs erzielt, wobei ebenfalls vorteilhaft die Düsengröße und/oder -zahl verringert werden kann.

Bei drehbar einspannbaren Werkstücken ist vorteilhaft vorgesehen, daß das Werkstück zusätzlich gleichzeitig in einer Teil der Einrichtung bildenden Spanneinrichtung um eine Achse A gedreht wird. Dieses Verfahren ist besonders vorteilhaft einsetzbar, wenn eine Vielzahl von rotationssymmetrischen oder nicht-rotationssymmetrischen, jedoch drehbar einspannbaren Werkstücken nacheinander gereinigt werden muß.

Besonders bevorzugt ist ein Frequenzbereich der Schwingungen zwischen 48 und 55 Hz, da hier ein besonders guter Wirkungsgrad erreicht wird.

Weiter sieht das Verfahren gemäß Erfindung vor, daß auf das Werkstück durch die Schwingungen Beschleunigungen bis zu maximal 25 g ausgeübt werden, wobei ein Bereich der Beschleunigungen zwischen 8 und 15 g besonders bevorzugt ist. Vorteilhaft sind die genannten Beschleunigungswerte einerseits ausreichend groß, um die an dem Werkstück anhaftenden Flüssigkeiten oder Flüssigkeit-Feststoff-Gemische relativ zum Werkstück zu mobilisieren und somit deren Absaugung zu erleichtern, aber andererseits auch niedrig genug, um Beschädigungen des Werkstückes selbst durch die auftretenden Beschleunigungen sicher auszuschließen.

Da unterschiedliche Werkstücke unterschiedliche Schwingungseigenschaften aufweisen und da unterschiedliche flüssige und/oder feste Verunreinigungen unterschiedlich auf die angewendeten Schwingungen reagieren, wird zweckmäßig vor der Serien-Reinigung von Werkstücken an einzelnen Probestücken eine Optimierung der oben erwähnten Schwingungs-Parameter vorgenommen, die dann für die Serien-Reinigung einer Vielzahl identischer Werkstücke, an denen weitestgehend identische Verunreinigungen auftreten, beibehalten werden können. Auf diese Weise ist eine kostengünstige und mit geringem Aufwand durchführbare Integration des Verfahrens und der zu dessen Durchführung eingesetzten Vorrichtung in Fertigungsstraßen z.B. in der Automobilherstellung, insbesondere in der Motorenfertigung, möglich.

Die verwendeten Schwingungserzeuger sind zweckmäßig zumindest innerhalb der angegebenen Frequenzbereiche in ihrer Frequenz einstellbar sowie zur Erzielung der gewünschten, bevorzugten Beschleunigungswerte auch hinsichtlich der Amplitude oder aufgebrachten Schwingungsenergie in ausreichendem Maße einstellbar und regelbar. Neben mechanischen Schwingungserzeugern mit rotierenden oder hin und her bewegten Unwuchtmassen können auch elektromagnetische oder piezoelektrische oder pneumatische oder hydraulische Schwingungserzeuger Verwendung finden. Die Auswahl der für den Einzelfall am besten geeigneten Schwingungserzeuger liegt im Ermessen des Fachmannes und hängt unter anderem von den Umgebungsbedingungen am Einsatzort des Verfahrens sowie vom zulässigen technischen Aufwand und dergleichen Randbedingungen ab.

Eine erfindungsgemäße Vorrichtung zur Lösung des vorrichtungsbezogenen Teils der Aufgabe ist im Anspruch 7 angegeben. Die Vorrichtung ermöglicht die Ausführung des erfindungsgemäßen Verfahrens mit hoher Betriebssicherheit und mit guten Reinigungsergebnissen bei geringen Betriebskosten.

Eine Ausführung der erfindungsgemäßen Vorrichtung für drehbar einspannbare Werkstücke ist im Anspruch 8 angegeben.

In einer Ausgestaltung der zuvor beschriebenen Vorrichtung ist vorgesehen, daß ein Schwingungserzeuger an einem Lagergehäuse eines der beiden Aufnahmedorne angebracht ist. Alternativ ist vorgesehen, daß je ein Schwingungserzeuger an zwei Lagergehäusen der beiden Aufnahmedorne angebracht ist.

In einer weiteren Ausgestaltung ist vorgesehen, daß die beiden Aufnahmedorne in einer allgemein U-förmigen Schwinggabel jeweils in deren U-Schenkeln drehbar gelagert sind, daß ein Spannzylinder an einem quer zu einem der U-Schenkel vorragenden Ansatz angeordnet ist, daß die Schwinggabel über vier Füße elastisch auf der Grundplatte gelagert ist und daß ein Schwingungserzeuger an der Schwinggabel angeordnet ist. Damit ist vorteilhaft mit nur einem Schwingungserzeuger eine Schwingungsanregung der Schwinggabel möglich, die ihre Schwingung dann auf das Werkstück überträgt, wobei die Schwinggabel sich elastisch auf der Grundplatte abstützt.

Zur Erzeugung einer stehenden Welle innerhalb des Werkstücks ist eine bestimmte Schwingungsfrequenz erforderlich. Da naturgemäß verschieden geformte Werkstücke zu bearbeiten sind, wird die Frequenz jeweils dem Werkstück angepaßt, was durch relativ einfache Versuche möglich ist. Die Schwingungen können in einer Richtung erfolgen, jedoch auch zirkular oder in mehreren Richtungen.

Zwei Ausführungsbeispiele von Vorrichtungen gemäß der Erfindung werden nunmehr anhand einer Zeichnung näher erläutert. Die Zeichnung zeigt in
- Figur 1: eine erste Vorrichtung in perspektivischer Darstellung, wobei sowohl Düsen als auch Spanndorne von einem Werkstück weg bewegt sind, und in
- Figur 2: eine zweite Vorrichtung, ebenfalls in perspektivischer Darstellung.

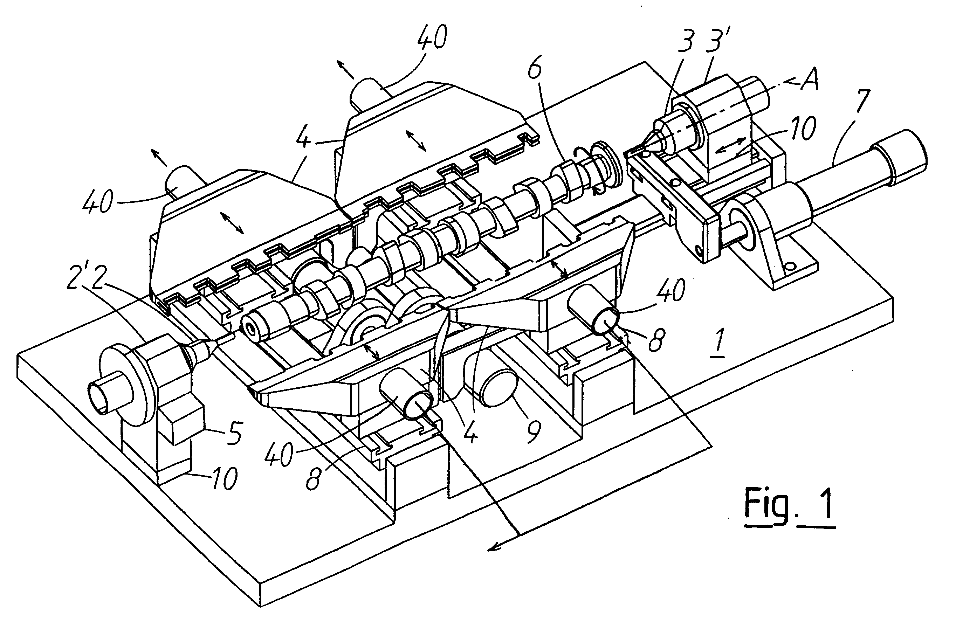

Mit Bezugnahme auf Figur 1 weist die Vorrichtung eine rechteckige Grundplatte 1 auf, auf der links ein Lagergehäuse 2' über eine elastische Zwischenplatte 10 angebracht ist, wobei in dem Lagergehäuse 2' ein Aufnahmedorn 2 drehbar gelagert ist. Dieser Aufnahmedorn 2 ist drehantreibbar, wobei der Drehantrieb, z.B. ein Elektromotor, nicht dargestellt ist. Auf der rechten Seite der Grundplatte 1 ist ein Lagergehäuse 3' angeordnet, in dem ein Aufnahmedorn 3 drehbar gelagert ist. Die beiden Aufnahmedorne 2 und 3 liegen auf einer Achse A. Der Aufnahmedorn 3 mit dem Lagergehäuse 3' ist über eine weitere elastische Zwischenplatte 10 auf der Grundplatte 1 verschiebbar in Richtung der Achse A gelagert, wobei die Schiebebewegung durch eine erste Vorschubeinheit 7 durchführbar ist. Die erste Vorschubeinheit 7 ist z.B. eine pneumatische oder hydraulische Kolben-Zylinder-Einheit.

Zwischen den beiden Aufnahmedornen 2 und 3 ist ein Werkstück 6 einspannbar, wobei es sich im vorliegenden Beispiel um eine Nockenwelle handelt. Wenn die beiden Aufnahmedorne 2 und 3 mit dem Werkstück 6 in Eingriff gebracht sind, ist dieses, wie durch den Pfeil am rechten Werkstückende dargestellt ist, drehantreibbar.

Beiderseits der Achse A sind insgesamt vier Saugdüsen 4 angeordnet, deren Mündungen in ihrer Form der Form des Werkstücks 6 angepaßt sind. Die Düsen 4 sind gemäß den daran eingezeichneten Doppelpfeilen quer zur Achse A verschiebbar, wozu jeweils zwei einander gegenüberliegende Düsen 4 auf jeweils einem Support 8 gelagert sind. Die Schubbewegung wird durch eine zweite Vorschubeinheit 9 durchgeführt, die zwischen den beiden Supporten 8 angeordnet ist und ebenfalls eine pneumatische oder hydraulische Kolben-Zylinder-Einheit sein kann.

Die Düsen 4 sind in Figur 1 zum Einlegen des Werkstücks 6 auseinandergefahren; zum Absaugen werden sie durch die zweite Vorschubeinheit 9 nahe an die Oberfläche des Werkstücks 6 gebracht. Im einfachsten Fall kann diese Vorschubeinheit 9 manuell betätigt werden; alternativ kann auch eine mechanische Steuerung mittels Schablonen oder eine elektronische Steuerung mittels gespeicherter Steuerdaten vorgesehen sein, um die Düsen 4 drehwinkelabhängig stets in ihre optimale Saugposition zu fahren. Die Luftbewegung ist durch Pfeile angedeutet, die bei den zugehörigen flexiblen Rohrleitungen 40, die jeweils nur teilweise dargestellt sind, eingezeichnet sind. Die Rohrleitungen 40 führen zu einer Saugeinrichtung, die als solche bekannt ist. Im Strömungsweg sind zweckmäßig Abscheider für Flüssigkeiten und Späne und andere feste Verunreinigungen in an sich bekannter Weise eingebaut.

Im vorliegenden Ausführungsbeispiel ist ein Schwingungserzeuger 5 an dem Lagergehäuse 2' fest angeordnet, wobei die elektrischen Zuführungsleitungen nicht dargestellt sind. Bei Aktivierung des Schwingungserzeugers 5 schwingen die beiden Lagergehäuse 2', 3' zusammen mit den Aufnahmedornen 2, 3 und dem Werkstück 6. Die übrigen, hiervon durch die Zwischenplatte 10 getrennten Teile der Vorrichtung sind im wesentlichen schwingungsfrei.

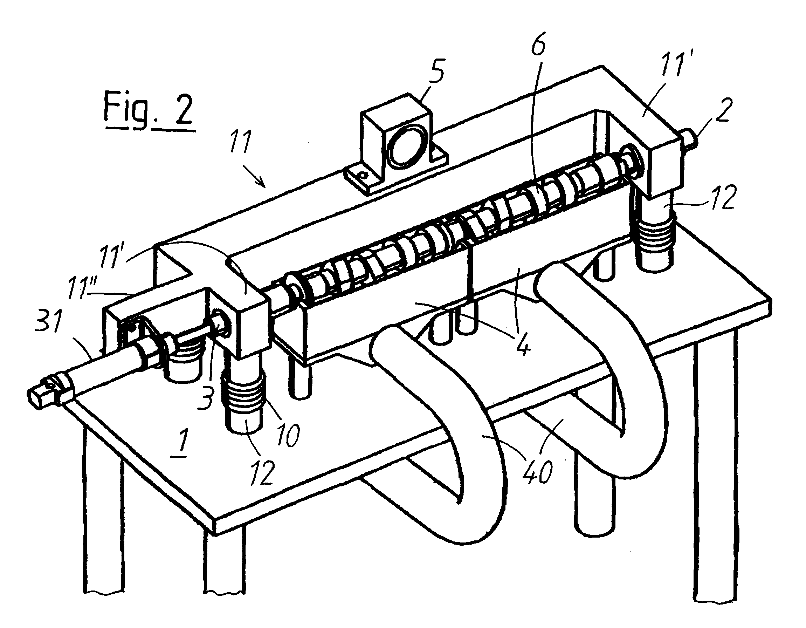

Figur 2 zeigt in perspektivischer Darstellung eine zweite Ausgestaltung der Vorrichtung. Auf einer ebenfalls rechteckigen Grundplatte 1 ist eine allgemein U-förmige Schwinggabel 11 in horizontaler Ausrichtung über vier Füße 12 angebracht, wobei jeder der vier Füße 12 eine elastische Zwischenplatte 10 aufweist. Die Füße 12 und die entsprechenden Zwischenplatten 10 sind im vorliegenden Beispiel mit einem kreisförmigen Querschnitt ausgeführt.

Die Schwinggabel 11 hat zwei U-Schenkel 11', die jeweils eine fluchtende Bohrung aufweisen, in der Aufnahmedorne 3 und 2 drehbar gelagert sind. Die Aufnahmedorne 2 und 3 nehmen zwischen sich ein Werkstück 6 auf, das hier ebenfalls als Nockenwelle dargestellt ist. Zum Einspannen des Werkstücks 6 dient ein Spannzylinder 31, der hydraulisch oder pneumatisch betätigbar ist und an einem Ansatz 11" angebracht ist, der quer zum linken Schenkel 11' der Schwinggabel 11 vorragt.

Auf dem Mittelsteg der Schwinggabel 11 ist ein Schwingungserzeuger 5 angeordnet.

Es sind weiter in der Figur 2 zwei Düsen 4 sichtbar, die jeweils über eine Rohrleitung 40 mit einer nicht dargestellten Saugeinrichtung verbunden sind. Die Düsen 4 sind jeweils auf Füßen an der Grundplatte 1 angebracht.

Die Grundplatte 1 steht tischartig auf vier Beinen.

Bei dieser Ausgestaltung schwingt bei Aktivierung des Schwingungserzeugers 5 die Schwinggabel 11 zusammen mit dem angebauten Ansatz 11" und Spannzylinder 12 sowie dem eingespannten Werkstück 6.

Durch das Zusammenwirken von Schwingungen und Absaugen insbesondere mittels speziell formangepaßter Düsen ist erfindungsgemäß eine wirkungsvolle und wirtschaftliche Reinigung vieler Arten von Werkstücken möglich.

## Patentansprüche

1. Verfahren zum Entfernen von an einem Werkstück (6) haftenden flüssigen Verunreinigungen in Form von Ölen oder Emulsionen, in denen feste Verunreinigungen, insbesondere Späne, enthalten sein können, wobei das Werkstück (6) in einer Einrichtung festgelegt und in Schwingungen versetzt wird,
**dadurch gekennzeichnet,**
- daß die Schwingungen mit einer Schwingungsfrequenz zwischen 20 und 100 Hz erzeugt werden,
- daß die Schwingungen an einem das Werkstück (6) festlegenden Teil der Einrichtung erzeugt werden,
- daß die Verunreinigungen gleichzeitig mittels eines durch mindestens eine an das Werkstück (6) formangepaßte Düse (4) geführten Luftstroms von dem Werkstück (6) abgesaugt werden und
- daß die abgesaugten flüssigen und festen Verunreinigungen durch geeignete Einrichtungen voneinander getrennt und jeweils einer erneuten oder neuen Verwendung zugeführt werden.

2. Verfahren nach Anspruch 1, dadurch gekennzeichnet, daß die Schwingungen in einer derartigen Frequenz erzeugt werden, daß das Werkstück (6) in einer stehenden Welle schwingt, und daß dabei das Werkstück (6) nur an den Knotenpunkten der stehenden Welle abgesaugt wird.

3. Verfahren nach Anspruch 1 oder 2, dadurch gekennzeichnet, daß das Werkstück (6) zusätzlich gleichzeitig in einer Teil der Einrichtung bildenden Spanneinrichtung um eine Achse (A) gedreht wird.

4. Verfahren nach einem der vorhergehenden Ansprüche, dadurch gekennzeichnet, daß die Schwingungen mit einer Schwingungsfrequenz zwischen 48 und 55 Hz erzeugt werden.

5. Verfahren nach einem der vorhergehenden Ansprüche, dadurch gekennzeichnet, daß auf das Werkstück (6) durch die Schwingungen Beschleunigungen bis zu maximal 25 g ausgeübt werden.

6. Verfahren nach Anspruch 5, dadurch gekennzeichnet, daß auf das Werkstück (6) durch die Schwingungen Beschleunigungen im Bereich zwischen 8 und 15 g ausgeübt werden.

7. Vorrichtung zur Durchführung des Verfahrens nach einem der Ansprüche 1 bis 6, mit einer auf einer Grundplatte (1) angeordneten Einrichtung zur Festlegung eines Werkstücks (6), an dem flüssige Verunreinigungen in Form von Ölen oder Emulsionen, in denen feste Verunreinigungen, insbesondere Späne, enthalten sein können, anhaften, und mit mindestens einem Schwingungserzeuger (5), mit dem das Werkstück (6) in Schwingungen versetzbar ist,
**dadurch gekennzeichnet,**
- daß die Einrichtung zur Festlegung des Werkstücks (6) elastisch auf der Grundplatte (1) gelagert ist,
- daß der Schwingungserzeuger (5) an der genannten Einrichtung angeordnet oder ankoppelbar ist,
- daß mindestens eine an die Form des Werkstücks (6) angepaßte oder durch verstellbare Düsenteile anpaßbare Düse (4) vorgesehen ist, die mit einer Saugeinrichtung verbunden ist und die auf der Grundplatte (1) in auswählbaren Positionen positionierbar ist, und
- daß eine nachgeschaltete Abscheide- oder Filtereinrichtung vorgesehen ist, in der die abgesaugten flüssigen und festen Verunreinigungen voneinander trennbar und dann einer erneuten oder neuen Verwendung zuführbar sind.

8. Vorrichtung nach Anspruch 7, dadurch gekennzeichnet, daß die Einrichtung zur Festlegung des Werkstücks (6) zwei drehbar entlang der Achse (A) gelagerte Aufnahmedorne (2, 3) umfaßt, wobei mindestens einer der Aufnahmedorne (2, 3) in Richtung der Achse (A) verschiebbar ist und wobei mindestens einer der Aufnahmedorne (2, 3) drehantreibbar ist.

9. Vorrichtung nach Anspruch 8, dadurch gekennzeichnet, daß ein Schwingungserzeuger (5) an einem Lagergehäuse (2', 3') eines der beiden Aufnahmedorne (2, 3) angebracht ist.

10. Vorrichtung nach Anspruch 8, dadurch gekennzeichnet, daß je ein Schwingungserzeuger (5) an zwei Lagergehäusen (2', 3') der beiden Aufnahmedorne (2, 3) angebracht ist.

11. Vorrichtung nach Anspruch 8, dadurch gekennzeichnet, daß die beiden Aufnahmedorne (2, 3) in einer allgemein U-förmigen Schwinggabel (11) jeweils in deren U-Schenkeln (11') drehbar gelagert sind, daß ein Spannzylinder (12) an einem quer zu einem der U-Schenkel (11') vorragenden Ansatz (11'') angeordnet ist, daß die Schwinggabel (11) über vier Füße elastisch auf der Grundplatte (1) gelagert ist und daß ein Schwingungserzeuger (5) an der Schwinggabel (11) angeordnet ist.

## Claims

1. Process for removing liquid impurities in the form of oils or emulsions which may contain solid impurities particularly chips adhering to a workpiece (6) wherein the workpiece (6) is secured in a device and made to vibrate,
**characterized in**
- that the vibrations are generated with a vibration frequency of between 20 and 100 Hz,
- that the vibrations are generated at a part of the device securing the workpiece (6),
- that the impurities simultaneously are sucked off the workpiece (6) by means of an air stream guided by a nozzle (4) which in the shape thereof is adapted to the workpiece (6), and
- that the sucked off liquid and solid impurities are separated from each other by suitable devices and each are used for a new or renewed purpose.

2. Process according to claim 1, characterized in that the vibrations are generated with such a frequency that the workpiece (6) vibrates in a standing wave, and that therein the workpiece (6) is sucked off only at the nodes of the standing wave.

3. Process according to claim 1 or 2, characterized in that the workpiece (6) additionally and simultaneously is rotated about an axis (A) in a clamping device forming a part of the device.

4. Process according to one of the preceeding claims, characterized in that the vibrations are generated with a vibration frequency of between 48 and 55 Hz.

5. Process according to one of the preceeding claims, characterized in that acceleration forces up to maximally 25 g are exerted onto the workpiece (6) by the vibrations.

6. Process according to claim 5, characterized in that acceleration forces in the range between 8 and 15 g are exerted on the workpiece (6) by the vibrations.

7. Device for carrying out the process according to one of the claims 1 to 6 comprising a device for securing a workpiece (6) on a base plate (1) with liquid impurities in the form of oils or emulsions which may contain solid impurities particularly chips adhearing to the workpiece (6), and at least one vibration generator (5) which is able to vibrate the workpiece (6),
**characterized in**
- that the device for securing the workpiece (6) is resiliently supported at the base plate (1),
- that the vibration generator (5) may be arranged at the said device or may be coupled thereto,
- that at least one nozzle (4) is provided which is adapted to the shape of the workpiece (6) or may be adapted by adjustable nozzle parts with the nozzle (4) connected to a suction device and to be positioned at the base plate (1) in selectable positions, and
- that a downstream arranged separation or filter device is provided wherein the sucked off liquid and solid impurities may be separated from each other and used for a new or renewed purpose.

8. Device according to claim 7, characterized in that the device for securing the workpiece (6) comprises two receiving mandrels (2, 3) rotatably supported along the axis (A) wherein at least one of the receiving mandrels (2, 3) is displaceable in the direction of the axis (A), and wherein at least one of the receiving mandrels (2, 3) may be driven to rotate.

9. Device according to claim 8, characterized in that a vibration generator (5) is arranged at a support housing (2', 3') of one of the two receiving mandrels (2, 3).

10. Device according to claim 8, characterized in that at each of the two support housings (2', 3') of the two receiving mandrels (2, 3) a vibration generator (5) is arranged.

11. Device according to claim 8, characterized in that the two receiving mandrels (2, 3) are rotatably supported in a generally U-shaped vibrating fork (11) in the U-legs (11') thereof, that a clamping cylinder (12) is arranged at a projection (11'') crosswise arranged at one of the U-legs (11'), that the vibrating fork (11) is resiliently supported at the base plate (1) by means of four feet, and that a vibration generator (5) is arranged at the vibration fork (11).

## Revendications

1. Procédé pour enlever des impuretés liquides sous la forme d'huiles ou d'émulsions qui adèrent à une pièce usinée (6) et dans lesquelles peuvent être contenues des impuretés solides, en particulier des copeaux, dans lequel la pièce usinée (6) est fixée dans un dispositif et est soumise à des vibrations,
caractérisé en ce que :
- les vibrations sont générées à une fréquence de vibration comprise entre 20 et 100 Hz,
- les vibrations sont générées sur une partie du dispositif de fixation de la pièce usinée (6),
- les impuretés sont enlevées simultanément par aspiration de la pièce usinée (6) au moyen d'au moins un flux d'air guidé par une buse (4) de forme adaptée à la pièce usinée (6),
- les impuretés liquides et solides aspirées sont séparées les unes des autres au moyen de dispositifs appropriés et chacune des sortes d'impuretés est envoyée à une réutilisation ou à une nouvelle utilisation.

2. Procédé selon la revendication 1, caractérisé en ce que les vibrations sont produites à une fréquence telle que la pièce usinée (6) vibre suivant une onde stationnnaire et que, de cette manière, la pièce usinée (6) n'est soumise à une aspiration qu'au niveau des noeuds de l'onde stationnaire.

3. Procédé selon la revendication 1 ou 2, caractérisé en ce que la pièce usinée (6) est, de plus, simultanément entraînée en rotation autour d'un axe (A) dans un dispositif de serrage faisant partie du dispositif.

4. Procédé selon l'une des revendications précédentes, caractérisé en ce que les vibrations sont générées à une fréquence de vibration comprise entre 48 et 55 Hz.

5. Procédé selon l'une des revendications précédentes, caractérisé en ce que, par l'intermédiaire des vibrations, on exerce, sur la pièce usinée (6), des accélérations allant jusqu'à un maximum de 25 g.

6. Procédé selon la revendication 5, caractérisé en ce que l'on exerce, par l'intermédiaire des vibrations, sur la pièce usinée (6), des accélératioons comprises entre 8 et 15 g.

7. Dispositif pour la mise en oeuvre du procédé suivant l'une des revendications 1 à 6, comportant un dispositif disposé sur une plaque de fond (1) pour la fixation d'une pièce usinée (6) sur laquelle peuvent adhérer des impuretés liquides sous la forme d'huiles ou d'émulsions, dans lesquelles peuvent être contenues des impuretés solides, en particulier des copeaux, et comportant au moins un générateur d'oscillations (5) au moyen duquel la pièce usinée (6) est soumise à des oscillations,
caractérisé en ce que :
- le dispositif pour la fixation de la pièce usinée (6) est monté de manière souple sur la plaque de fond (1),
- le générateur d'oscillations (5) est disposé sur ledit dispositif ou est couplé à ce dernier,
- on prévoit au moins une buse (4) qui est adaptée, ou adaptable par l'intermédiaire de pièces de buse, à la forme de la pièce usinée (6), qui est reliée à un dispositif d'aspiration et qui peut être positionnée sur la plaque de fond (1) dans des positions sélectionnées,
- on prévoit un dispositif de séparation ou de filtrage dans lequel les impuretés solides et liquides aspirées peuvent être séparées les unes des autres et peuvent être ensuite envoyées à une réutilisation ou à une nouvelle utilisation.

8. Dispositif selon la revendication 7, caractérisé en ce que le dispositif pour la fixation de la pièce usinée (6) comprend deux mandrins porte-pièces (2, 3) montés à rotation le long de l'axe (A), dans lequel au moins un des deux mandrins porte-pièces (2, 3) peut être déplacé dans la direction de l'axe (A) et au moins un des deux mandrins porte-pièces (2, 3) peut être entraîné en rotation.

9. Dispositif selon la revendication 8, caractérisé en ce qu'un générateur d'oscillations (5) est placé dans un logement de palier (2', 3') aménagé dans un des deux mandrins porte-pièces (2, 3).

10. Dispositif selon la revendication 8, caractérisé en ce qu'un générateur d'oscillations (5) est placé dans chacun des deux logements (2', 3') des deux mandrins porte-pièces (2, 3).

11. Dispositif selon la revendication 8, caractérisé en ce que les deux mandrins porte-pièces (2, 3) sont montés à rotation dans une fourche d'oscillation (11) ayant la forme générale d'un "U", à chaque fois entre les branches (11') du "U", en ce qu'un vérin de serrage (12) est disposé sur un appendice (11") faisant saillie transversalement sur une des branches (11') du "U", en ce que la fourche d'oscillation (11) est montée de manière souple par l'intermédiaire de quatre pieds sur la plaque de fond (1) et en ce qu'un générateur d'oscillations (5) est disposé sur la fourche d'oscillation (11).
